# EUROPÄISCHE PATENTSCHRIFT

(11) **EP 3 666 493 B1**
(45) Veröffentlichungstag und Bekanntmachung des Hinweises auf die Patenterteilung: **13.10.2021**
(21) Anmeldenummer: 19214821.1
(22) Anmeldetag: 10.12.2019
(51) Int. Cl.: B29C 45/73, B29C 45/26, B29K 105/00

(54) **KÜHLSYSTEM FÜR EINEN FORMKERN EINES SPRITZGIESSWERKZEUGES**
COOLING SYSTEM FOR A MOULD CORE OF AN INJECTION MOULDING TOOL
SYSTÈME DE REFROIDISSEMENT POUR UN NOYAU DE MOULE D'UN OUTIL DE MOULAGE PAR INJECTION

(30) Priorität: 14.12.2018 DE 102018132332
(43) Veröffentlichungstag der Anmeldung: 17.06.2020
(73) Patentinhaber: MHT Mold & Hotrunner Technology AG, 65239 Hochheim (DE)
(72) Erfinder: WEGMANN, Klaus, 55218 Ingelheim (DE); KALBHEN, Bernd, 55278 Dolgesheim (DE); KRÄNKEL, Harry, 64380 Roßdorf (DE)
(74) Vertreter: WSL Patentanwälte Partnerschaft mbB

(56) Entgegenhaltungen:
- DE-A1-102004 022 306
- DE-T2- 69 910 823
- GB-A- 2 397 548
- JP-A- H10 128 839
- US-A1- 2016 214 280

## Beschreibung

Die vorliegende Erfindung betrifft ein Kernkühlsystem für einen Formkern zum Spritzgießen von Preforms aus Kunststoff, bestehend aus einem Formkern und einem Kühlrohr. Preforms werden in diesem Zusammenhang auch als Vorformlinge bezeichnet.

Die vorliegende Erfindung wird insbesondere bei Kernkühlsystemen von Spritzgießwerkzeugen verwendet, die zur Herstellung von Preforms geeignet sind, kann aber auch bei Kühlsystemen anderer Werkzeuge Verwendung finden.

Spritzgießwerkzeuge können zur Herstellung unterschiedlichster Produkte verwendet werden, wobei sie insbesondere zur Herstellung von Preforms eingesetzt werden, aus denen durch weitere Umformungsverfahren fertige Endprodukte hergestellt werden. Beispielsweise wird durch das Aufblasen eines zuvor mittels Spritzgießverfahrens hergestellten Preforms eine PET-Flasche hergestellt. Spritzgießwerkzeuge weisen in der Regel eine Vielzahl von Kavitäten (Formbehälter), z.B. 96 Kavitäten, und dazugehörige Formkerne auf. Zur Herstellung eines Preforms werden die Formkerne in die Kavitäten eingeführt. Kavität und Formkern sind dabei derart ausgebildet und angeordnet, dass nach dem Einführen des Formkerns in die Kavität zwischen der Innenfläche der Kavität und der Außenfläche des Formkerns ein sogenannter Formraum ausgebildet ist, dessen Form der gewünschten Form des Preforms entspricht. Der Formraum wird nach außen durch die Kavität und nach innen durch den Formkern begrenzt. Folglich entsprechen die Außenkontur des Preforms der Innenkontur der Kavität und die Innenkontur des Preforms der Außenkontur des in die Kavität ragenden Formkerns. In den Formraum wird die Schmelze - in der Regel plastifizierter Kunststoff, z.B. PET, - unter hohem Druck eingespritzt. Sobald die Schmelze genügend abgekühlt und dadurch ausreichend verfestigt ist, wird die Form geöffnet und die verfestigte Schmelze als Preform aus der Kavität entnommen.

Um die Zykluszeiten, d.h. die Zeit von einem Spritzvorgang bis zu dem nächsten Spritzvorgang, zu reduzieren, ist es üblich, den Preform zu einem sehr frühen Zeitpunkt aus der Kavität zu entnehmen und von dem Formkern zu lösen. Dadurch kann eine höhere Effizienz des Werkzeuges erreicht werden. Dazu ist es notwendig, die Schmelze, sobald sie in dem Formraum zwischen Formkern und Kavität angekommen ist, effizient zu kühlen, damit der Preform nach kurzer Zeit zumindest derart verfestigt ist, dass er sich bei der Entnahme nicht in ungewünschter Weise verformt bzw. Rückstände der Schmelze am Formkern oder in der Kavität zurückbleiben.

Um eine reibungslose Herstellung von Preforms zu gewährleisten, muss die sich im Formraum befindende Schmelze nach dem Einspritzen daher schnell und effizient abgekühlt werden. Die Kühlung des Preforms erfolgt dabei durch den Formkern, der dementsprechend auch als Kühlstift fungiert. Der Formkern wird mit einem Kernkühlsystem gekühlt, das in der Regel auf einem Kühlfluidkreislauf beruht. Der Formkern ist zu diesem Zwecke als einseitig geschlossene Hülse ausgebildet, in die Kühlfluid kontinuierlich hinein- und anschließend wieder hinausgeleitet wird. Ein solches Kernkühlsystem setzt sich im Sinne der vorliegenden Erfindung zumindest aus dem Formkern selbst sowie einem Kühlrohr, durch das das notwendige Kühlfluid (Kühlflüssigkeit oder Kühlgas) in das Innere des Formkerns geleitet wird, zusammen.

Solch ein Kernkühlsystem ist aus der EP 1019 234 B1 bekannt. Aus der GB 2 397 548 A ist ein Kernkühlsystem mit einem mehrteiligen Kühlrohr bekannt. Auch aus der JP H-10128839 A ist ein Kühlrohr bekannt, welches aus zwei ineinander geschobenen Teilen besteht. Der DE 699 10 823 T2 ist ein Kühlrohr zu entnehmen, welches eine gerillte Außenkontur aufweist.

In der Regel wird Kühlfluid über das Kühlrohr zur Spitze des Formkerns geleitet, tritt an dieser Stelle aus dem Kühlrohr aus und fließt durch den Spalt zwischen der Außenfläche des Kühlrohrs und der Innenfläche des Formkerns wieder ab.

Prinzipiell kann die Flussrichtung auch umgekehrt verlaufen. Im Folgenden wird allerdings, um die Beschreibung zu vereinfachen, ausschließlich auf erstgenannte Flussrichtung bezuggenommen.

Der Kanal, der durch die Innenfläche des Kühlrohrs begrenzt ist, wird im Folgenden als Fluidkanal und der Kanal, der sich als Spalt zwischen der Innenfläche des Formkerns und der Außenfläche des Kühlrohrs erstreckt, als Kernkühlkanal bezeichnet. Der gesamte Bereich, in dem Kühlfluid fließen kann, d. h. die Kombination aus Fluidkanal und Kernkühlkanal, wird im Folgenden als Kühlleitung bezeichnet.

Da das Kühlrohr mit Kühlwasser beaufschlagt wird, kann es zu einer axialen Bewegung des Kühlrohr innerhalb des Formkerns kommen. Durch den Wasserdruck wird somit das Kühlrohr nach vorne in Richtung der Spitze des Formkerns gedrückt. Es sind daher bereits Kühlrohre bekannt, die an ihrer Spitze Vorsprünge aufweisen. Diese Vorsprünge sollen verhindern, dass es bei einer Bewegung des Kühlrohrs entlang der Längsachse in Richtung der Spitze des Formkerns zu einem Verschluss der Kühlleitung kommt.

Vereinzelt wurden Zentrierelemente verwendet, die über die Außenfläche des Kühlrohrs gezogen werden, um das Kühlrohr im Zentrum des Formkerns zu positionieren. Eine Abstützung des Kühlrohrs, um eine Vorwärtsbewegung des Kühlrohrs innerhalb des Formkerns zu verhindern, ist jedoch hiermit nicht verbunden.

Grundsätzlich ist eine gleichmäßige Kühlung des Formkerns wünschenswert. Dazu müsste der Formkern am besten eine konstante Wanddicke aufweisen und durch die Außenfläche des Kühlrohrs sichergestellt werden, dass der sich zwischen Außenfläche des Kühlrohrs und Innenkontur des Formkerns bildende Kühlkanal ebenfalls eine im wesentlichen konstante Dicke aufweist. Eine solche konturennahe Ausgestaltung des Kühlrohrs ist erstrebenswert, aber nicht einfach und kostengünstig herzustellen. Jedes Endprodukt, folglich jede Variante von PET-Flaschen, wird aus einem genau auf dieses Produkt zugeschnittenen Preform gefertigt. Daher unterscheiden sich die Preforms der Produkte untereinander genauso wie sich die Produkte untereinander unterscheiden. Ebenso unterscheiden sich die dabei verwendeten Formkerne und folglich auch die Innenkonturen der Formkerne. Schlussendlich muss daher für jede Variante von Formkernen eine eigene Variante von Kühlrohren hergestellt werden, um einen konturnahen Kernkühlkanal bereitzustellen. Dies ist in der Regel mit einem hohem Aufwand und hohen Kosten verbunden.

Zudem hat sich die Verwendung von Vorsprüngen an der Stirnseite des Kühlrohrs als nachteilig erwiesen, da sich das Kühlfluid beim Austreten aus dem Kühlrohr nicht gleichmäßig in alle Richtungen verteilt, weil das Kühlfluid die Vorsprünge umfließen muss. Dadurch kommt es zu einer inhomogenen Kühlung des Preforms, insbesondere in der Nähe der Vorsprünge an der Spitze des Formkerns.

Das Abstützen des Kühlrohrs über die Vorsprünge ist zudem nicht sehr stabil und mit einem erhöhten Verschleiß verbunden, da das Kühlrohr über die Vorsprünge nur an der Spitze des Kühlrohrs abgestützt wird. Da die Vorsprünge keine zur Innenkontur des Formkerns korrespondierende Außenkontur aufweist, kommst es zudem beim Abstützen zu einer erhöhten Reibung zwischen der Innenfläche des Formkerns und den Vorsprüngen und somit zu einem erhöhten Verschleiß der Vorsprünge.

Ausgehend von diesem Stand der Technik ist es daher Aufgabe der vorliegenden Erfindung, mindestens eines der oben genannten Probleme zu lösen oder zumindest zu verringern. Folglich bestehen die der vorliegenden Erfindung zugrunde liegenden Aufgaben darin, ein Kernkühlsystem bzw. einen Formkern oder ein Kühlrohr bereitzustellen, durch die ein stabiles Abstützten des Kühlrohrs, eine möglichst einfache und kostengünstige konturnahe Ausbildung des Kernkühlkanals und eine verbesserte homogenere Kühlung des Formkerns ermöglicht wird.

Erfindungsgemäß wird zumindest eine dieser Aufgaben durch ein Kühlrohr gemäß Anspruch 1 bzw. ein Kernkühlsystem gemäß Anspruch 11 gelöst.

Das erfindungsgemäße Kühlrohr ist für einen Formkern eines Spritzgießwerkzeuges zum Spritzgießen von Preforms aus Kunststoff vorgesehen. Das Kühlrohr erstreckt sich dabei entlang einer Längsachse und weist eine Innenfläche und eine Mantel- bzw. Außenfläche auf, wobei durch die Innenfläche ein Fluidkanal begrenzt wird, der sich durch das Kühlrohr erstreckt. Zudem weißt die Außenfläche ein Stützelement mit einer Stützfläche auf, die mit der Längsachse einen Winkel einschließt, der größer als 0° ist. Dabei weist das Stützelement zumindest eine in axialer Richtung verlaufende Ausnehmung auf.

Die Innenfläche und die Außenfläche eines Kühlrohrs sind in der Regel an beiden Enden des Kühlrohres jeweils über eine Kantenfläche miteinander verbunden. Diese Kantenflächen zählen im Sinne der vorliegenden Erfindung nicht zur Außenfläche des Kühlrohrs und stellen folglich keine Stützflächen dar.

Dem Kühlrohr liegt der Erfindungsgedanke zugrunde, das Kühlrohr nicht wie bisher üblich über stirnseitige Vorsprünge abzustützen, sondern das Kühlrohr über ein Stützelement abzustützen, das eine Stützfläche aufweist, die mit der Längsachse einen Winkel größer als 0° einschließt. Dabei ist die Stützfläche dafür vorgesehen mit dem Formkern in Kontakt zu treten und sich über die Stützfläche an diesem abzustützen.

Dabei ist es jedoch wesentlich, dass das Stützelement den Kernkühlkanal nicht verschließt. Daher ist erfindungsgemäß im Stützelement zumindest eine in axialer Richtung verlaufende Ausnehmung vorgesehen. Das Kühlfluid kann durch diese Ausnehmung durch das Stützelement hindurch strömen.

Der Vorteil der erfindungsgemäßen Abstützung besteht darin, dass auf stirnseitige Vorsprünge verzichtet werden kann und sich daher das Kühlfluid beim Austreten aus dem Kühlrohr gleichmäßig in alle Richtungen verteilt. Dadurch werden eine homogenere Kühlung des Formkerns und folglich auch eine homogenere Kühlung des Preforms erreicht. Zudem ermöglicht die vorliegende Erfindung Ausführungsformen, bei denen das Abstützen über Stützelemente umgesetzt wird, die mit einer größeren Fläche als bisher am Formkern bzw. am Kühlrohr anliegen. Dadurch wird ein weniger punktuelles und dadurch ein stabileres und mit einem geringeren Verschleiß einhergehendes Abstützen ermöglicht.

Unter einem Stützelement ist ein Element zu verstehen, das eine Stützfläche aufweist, die dafür vorgesehen ist, an einem Formkern bzw. einem Kühlrohr anzuliegen, wobei über diese Stützfläche bei einem Kernkühlsystem mit einem unter Krafteinwirkung in das Innere des Formkerns eingeführten Kühlrohr eine Kraft von dem Kühlrohr auf den Formkern übertragen wird

Unter einem Winkel, den die Stützfläche mit der Längsachse einschließt, ist der Winkel zu verstehen, der in einer Schnittebene, die die Längsachse beinhaltet, von der Längsachse und einer an die Stützfläche angelegten Tangente eingeschlossen wird. Der Winkel ergibt sich folglich aus dem Schnittwinkel zwischen einer ersten Geraden (der Längsachse) und einer zweiten Geraden (der Tangenten). Demnach liegt der Winkel für jede Tangente zwischen 0° und 90°. Bei einem Winkel (Schnittwinkel) von 90° schneidet die Längsachse die Tangente unter einem rechten Winkel. Verläuft die Längsachse parallel zur Tangente, sodass kein Schnittpunkt vorhanden ist, so beträgt der Winkel 0°. Für das Verständnis dieser Betrachtung ist zu beachten, dass die Längsachse als eine mittig entlang des Fluidkanals verlaufende Achse zu verstehen ist. Ist das Kühlrohr oder der Formkern rotationsymmetrisch bezüglich der Längsachse, so ist die Lage der Tangenten an der Stützfläche unabhängig von der betrachteten Schnittebene. Bei einer als konusförmige Verjüngung ausgebildeten Stützfläche handelt es sich beispielsweise um eine bezüglich der Längsachse rotationssymmetrische Stützfläche mit konstantem Winkel, den die Stützfläche mit der Längsachse einschließt.

In einer besonders bevorzugten Ausführungsform schließt die Stützfläche mit der Längsachse Winkel zwischen 5° und 45°, besonders bevorzugt Winkel zwischen 10° und 25° und am besten einen Winkel von 15° ein. Prinzipiell können dabei Formkerne und Kühlrohre kreisförmige aber auch nicht-kreisförmige Querschnittsflächen in einer Schnittebene senkrecht zur Längsachse aufweisen. Es hat sich gezeigt, dass bei einer Ausbildung der Stützflächen mit den genannten Winkeln zur Längsachse die Stützelemente stabil an der Kerninnenfläche bzw. an der Außenfläche des Kühlrohrs anliegen können, ohne dass es im Dauerbetrieb zu Verlagerungen des Kühlrohrs oder zu Verformungen der Stützelemente kommt. Dadurch können lange Betriebszeiten mit einem geringen Wartungsbedarf gewährleistet werden.

In einer alternativen Ausführungsform ist die Stützfläche im Wesentlichen rechtwinklig zur Längsachse angeordnet. Dies kann auch als stufenförmige Verjüngung der Außenfläche des Kühlrohr bzw. der Kerninnenfläche bezeichnet werden. Eine solche Ausführungsform geht mit einem besonders geringen Verschleiß der Stützelemente einher, da die Kräfte beim Abstützen im Wesentlichen senkrecht zur Stützfläche übertragen werden. Somit entstehen nur geringe Scherkräfte an den Stützelementen.

Erfindungsgemäß schließt sich an das Stützelement in Längsrichtung ein erstes Zentrierelement mit einer Zentrierfläche an, die mit der Längsachse im Wesentlichen einen Winkel von 0° einschließt. Die Zentrierfläche ist dafür vorgesehen, mit dem Kühlrohr bzw. dem Formkern zumindest dann in Kontakt zu treten, wenn das Kühlrohr nicht exakt zentrisch im Formkern angeordnet ist. Das Zentrierelement dient nicht der Abstützung des Kühlrohrs im Formkern. Solche Zentrierelemente können ebenfalls zur gezielten Führung des Fluides dienen, indem sie auch in Abschnitten, die kein Stützelement aufweisen, das Fluid in bestimmte Bahnen leiten. Dadurch kann das Auftreten von Turbulenzen und eine damit verbundene Erwärmung des Kühlfluides vermieden werden. Zudem tragen solche Zentrierelemente, insofern sie derart ausgebildet sind, dass sie in einem zusammengefügten Zustand von Formkern und Kühlrohr im Kontakt mit der Kerninnenfläche bzw. der Außenfläche des Kühlrohrs stehen, zu einer stabilen Lagerung des Kühlrohrs innerhalb des Formkern bei. Die Zentrierelemente stützen das Kühlrohr folglich in Richtungen senkrecht zur Längsachse ab und zentrieren es innerhalb des Formkerns, sodass eine seitliche Verlagerung des Kühlrohrs innerhalb des Formkerns verhindert wird.

In einer weiteren Ausführungsform sind Stützelement und erstes Zentrierelement einstückig ausgebildet. In diesem Zusammenhang wird unter einstückig eine Ausbildung in einem Stück und aus demselben Material verstanden. Elemente, welche beispielsweise mittels Kleben, Löten oder Schweißen miteinander verbunden sind, sind nicht einstückig im Sinne der vorliegenden Erfindung mit dem jeweiligen Element bzw. der jeweiligen Fläche ausgebildet. Eine solche einstückige Ausbildung ist vorteilhaft, da in diesem Fall das Kühlfluid nicht zusätzliche Strömungshindernisse umfließen muss, wie dies beispielsweise bei einer getrennten Ausbildung der Fall wäre. Bei einer getrennten Ausbildung müsste das Kühlfluid sowohl das Stützelement als auch das Zentrierelement umfließen, wobei bei jedem Umfließen zusätzliche Turbulenzen auftreten würden, durch die sich das Kühlfluid erwärmen würde. Bei einer einstückigen Ausbildung treten diese Nachteile nicht auf.

In einer besonders bevorzugten Ausführungsform ist ein zweites Zentrierelement mit einer zweiten Zentrierfläche vorgesehen, das sich derart in Längsrichtung an das Stützelement anschließt, dass das Stützelement zwischen erstem und zweitem Zentrierelement angeordnet ist. Erstes und zweites Zentrierelement sowie das Stützelement sind vorzugsweise einstückig ausgebildet. Die aus dieser Anordnung der Stützflächen und Zentrierflächen resultierende Form der Außenfläche des Kühlrohrs bzw. der Kerninnenfläche geht in der Praxis mit einer besonders konturnahen Ausbildung des Kernkühlkanals einher.

In einer bevorzugten Ausführungsform beträgt der maximale Abstand zwischen der Außenfläche des Kühlrohrs und der Kerninnenfläche des Formkerns 3 mm. Für manche Anwendungsfälle hat sich ein maximaler Abstand zwischen der Außenfläche des Kühlrohrs und der Kerninnenfläche des Formkerns von 2 mm als vorteilhaft erwiesen.

In einer besonders bevorzugten Ausführungsform erstrecken sich Stütz- und Zentrierelemente wendeiförmig in Längsrichtung um die Außenfläche bzw. Kerninnenfläche.

Die wendeiförmige Ausbildung der Stützelemente hat den Vorteil, dass das Kühlrohr während des Betriebs und der Strömung des Kühlfluids deutlich stabiler innerhalb des Formkerns gelagert ist. Dies ist dadurch zu erklären, dass ohne eine durch Stütz- und Zentrierelemente bewirkte Führung des Kühlfluids in Kanälen, kleinste Druck- bzw. Geschwindigkeitsdifferenzen ausreichen, um das Kühlrohr im Betrieb zu destabilisieren oder sogar in Schwingung zu versetzten. Auftretende Druck- und Geschwindigkeitsdifferenzen werden allerdings durch die wendeiförmige Führung des Kühlfluids ausgeglichen. Beispielsweise kann konstruktionsbedingt die Schmelze auf einer Seite des Formkerns heißer sein, als auf der anderen. Durch die wendeiförmige Führung des Kühlfluids werden dann annähernd alle Partikel des Kühlfluids an der Kühlung der heißeren Seite beteiligt, was bei einer geradlinigen Führung nicht der Fall wäre. Dadurch wird die Kühlung effizienter, wodurch kürzere Zykluszeiten ermöglicht werden.

In einer alternativen Ausführungsform ist das Zentrierelement länglich ausgebildet und ist entlang einer Geraden angeordnet, welche parallel zur Längsachse verläuft. Diese Ausführungsform ist sehr einfach ausgebildet und daher in der Regel einfacher und kostengünstiger herzustellen.

In einer weiteren Ausführungsform sind zwei bis zehn und vorzugsweise vier bis sechs in Umfangrichtung voneinander beabstandete Stützelemente vorgesehen. Durch mehrere Stützelemente wird auf vorteilhafte Weise ein gleichmäßigeres Abstützen des Kühlrohrs ermöglicht. Dadurch gewinnt das Kernkühlsystem an Stabilität. Zudem kann durch mehrere Stützelemente auch gleichzeitig der Kernkühlkanal auf mehrere Unterkanäle (Bahnen) aufgeteilt werden. Dadurch kann das Entstehen von Turbulenzen innerhalb des Kühlfluids und eine damit einhergehende Erwärmung des Kühlfluids verhindert werden.

In einer besonders bevorzugten Ausführungsform ist das Kühlrohr bzw. der Formkern durch ein 3D-Druckverfahren hergestellt. Der Vorteil des 3D-Druckverfahren besteht in diesem Zusammenhang darin, dass jede beliebige Anordnung der Stützelemente - sei sie auch noch so kompliziert - einfach hergestellt werden kann. Dadurch ist es insbesondere auf einfache und kostengünstige Weise möglich ein Stützelement einstückig mit dem Kühlrohr oder dem Formkern auszubilden.

In einer weiteren bevorzugten Ausführungsform ist das Kühlrohr bzw. der Formkern einstückig ausgebildet. Eine einstückige Ausbildung ist dahingehend vorteilhaft, da keine Naht- oder Klebestellen existieren, die zumeist einem erhöhten Verschleiß ausgesetzt sind. Daher wird durch eine einstückige Ausbildung eine längere Lebensdauer des Kühlrohrs bzw. Formkerns gewährleistet.

In einer besonderen Ausführungsform besteht das Kühlrohr aus Kunststoff und vorzugsweise aus Polyamid (PA) oder Acrylnitril-Butadien-Styrol-Copolymere (ABS). Alternativ ist auch eine Herstellung aus Polyvinylchlorid (PVC) vorteilhaft. Kunststoff bietet als Material die Vorteile, dass es einerseits kostengünstig ist und andererseits leicht in eine gewünschte Form gebracht werden kann. Insbesondere in Verbindung mit einem 3D-Druckverfahren, kann ein Kühlrohr mit hoher Güte und beliebiger Form aus PA, ABS oder PVC hergestellt werden.

In einer weiteren Ausführungsform ist das Stützelement als Flansch und die mindestens eine Ausnehmung als Durchlassöffnung ausgebildet. Das Kühlfluid kann über die Durchlassöffnungen aus dem Formkern heraus fließen bzw. in den Formkern hineinfließen. Der Flansch kann eine Anschlagsfläche aufweisen, die dafür vorgesehen ist, an einer korrespondierenden Anschlagsfläche des Formkerns anzuliegen. Durch den Flansch wird folglich eine weitere Erhöhung der Stabilität der Lagerung des Kühlrohrs innerhalb des Formkerns bewirkt.

In einer besonders bevorzugten Ausführungsform ist das Kühlrohr zweiteilig ausgebildet. Es besteht dabei einerseits aus einem Zuführrohr, das vorzugsweise eine konstante innere und eine konstante äußere Querschnittsfläche aufweist, und andererseits aus einem Rohraufsatz (bzw. einer Rohrverlängerung), wobei vorzugsweise der Rohraufsatz einen Abschnitt des Zuführrohrs umgibt oder ein Abschnitt des Rohraufsatzes vom Zuführrohr umgeben wird. Der Vorteil dieser Ausführungsform besteht darin, dass das Zuführrohr fest verbunden mit einem Spritzgießwerkzeug in diesem verbaut sein kann und der Rohraufsatz durch eine einfache Steckverbindung mit dem Zuführrohr verbunden werden kann. Für unterschiedliche Preforms bzw. Formkerne kann daher problemlos dasselbe Spritzgießwerkzeug verwendet werden, wobei zur passenden Kühlung ausschließlich die Rohraufsätze abhängig vom verwendeten Formkern gewechselt werden müssen. Das Stützelement ist vorzugsweise am Rohraufsatz angeordnet.

Die vorliegende Erfindung umfasst zudem auch ein Kernkühlsystem eines Spritzgießwerkzeuges zum Spritzgießen von Preforms aus Kunststoff mit einem Formkern. Der Formkern hat dabei die Gestalt einer einseitig geschlossenen, hohlen Hülse mit einer Längsachse, einer Kernaußenfläche und einer Kerninnenfläche. Ferner weist das Kernkühlsystem ein Kühlrohr mit einer Längsachse, einer Innenfläche und einer Außenfläche für ein Formkern eines Spritzgießwerkzeuges zum Spritzgießen von Preforms aus Kunststoff auf, wobei durch die Innenfläche ein Fluidkanal begrenzt wird, der sich durch das Kühlrohr erstreckt. Das Kühlrohr ist dabei derart im Formkern angeordnet, dass ein sich an den Fluidkanal anschließender Kernkühlkanal durch den zwischen der Außenfläche des Kühlrohrs und der Kerninnenfläche verbleibenden Spalt gebildet wird. Erfindungsgemäß ist ein Stützelement derart zwischen der Kerninnenfläche des Formkerns und der Außenfläche des Kühlrohrs angeordnet, so dass - bei einem Einsetzen des Kühlrohrs in den Formkern mit Krafteinwirkung - von dem Kühlrohr über das Stützelement eine Kraft auf den Formkern ausgeübt wird. Kühlrohr bzw. Formkern dieses Kernkühlsystems können dabei gemäß einer der oben beschriebenen Ausführungsformen ausgebildet sein.

In einer besonders bevorzugten Ausführungsform ist der Abstand zwischen der Kerninnenfläche und der Außenfläche des Kühlrohrs entlang des Kernkühlkanals im Wesentlichen konstant. Dadurch ergibt sich im Wesentlichen eine gleichmäßige Geschwindigkeit der Strömung innerhalb des Spalts zwischen der Kerninnenfläche und der Außenfläche des Kühlrohrs (im Kernkühlkanal), wodurch eine homogene Kühlung des Preforms bewirkt wird.

Zumeist sind mindestens zwei Stützelemente vorgesehen, die derart die Kerninnenfläche bzw. die Außenfläche des Kühlrohrs berühren, sodass zumindest abschnittsweise zwei oder mehrere voneinander beabstandete Unterkanäle des Kernkühlkanals ausgebildet sind. Dies trägt zu einer besseren Fluidführung einer damit einhergehenden Vermeidung von Turbulenzen bei.

Weitere Vorteile, Merkmale und Anwendungsmöglichkeiten der vorliegenden Erfindung werden deutlich anhand der folgenden Beschreibung bevorzugter Ausführungsformen. Es zeigen:
- Figur 1A:: eine perspektivische Ansicht einer ersten Ausführungsform des erfindungsgemäßen Kernkühlsystems in einem zusammengebauten Zustand (links) und in einer Explosionsdarstellung (rechts),
- Figur 1B:: eine Schnittansicht der in Figur 1A gezeigten Ausführungsform des erfindungsgemäßen Kernkühlsystems in einem zusammengebauten Zustand (links) und in einer Explosionsdarstellung (rechts),
- Figur 2A:: eine erste perspektivische Ansicht einer zweiten Ausführungsform des erfindungsgemäßen Kernkühlsystems in einem zusammengebauten Zustand (links) und in einer Explosionsdarstellung (rechts),
- Figur 2B:: eine Schnittansicht der in Figur 2A gezeigten Ausführungsform des erfindungsgemäßen Kernkühlsystems in einem zusammengebauten Zustand (links) und in einer Explosionsdarstellung (rechts),
- Figur 2C:: eine zweite perspektivische Ansicht (Rückseitenansicht) der in Figur 2A gezeigten Ausführungsform des erfindungsgemäßen Kernkühlsystems,
- Figur 3A:: eine perspektivische Ansicht einer dritten Ausführungsform des erfindungsgemäßen Kernkühlsystems in einem zusammengebauten Zustand (links) und in einer Explosionsdarstellung (rechts),
- Figur 3B:: eine Schnittansicht der in Figur 3A gezeigten Ausführungsform des erfindungsgemäßen Kernkühlsystems in einem zusammengebauten Zustand (links) und in einer Explosionsdarstellung (rechts),
- Figur 4A:: eine perspektivische Ansicht einer vierten Ausführungsform des erfindungsgemäßen Kernkühlsystems in einem zusammengebauten Zustand (links) und in einer Explosionsdarstellung (rechts),
- Figur 4B:: eine Schnittansicht der in Figur 4A gezeigten Ausführungsform des erfindungsgemäßen Kühlsystems in einem zusammengebauten Zustand und
- Figur 5:: eine perspektivische Ansicht (Rückseitenansicht) wie in Figur 2A einer fünften Ausführungsform der Erfindung.

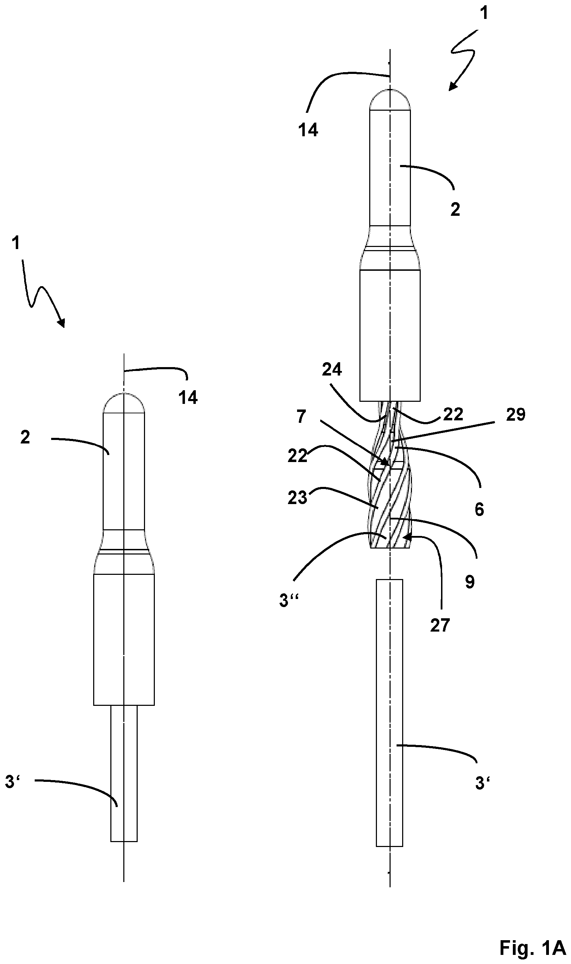

Die in Figur 1A gezeigte erste Ausführungsform eines Kernkühlsystems 1 besteht aus einem Formkern 2 und einem Kühlrohr, das sich aus einem Zuführohr 3' und einem Rohraufsatz 3" zusammensetzt. Im Sinne der vorliegenden Erfindung kann auch der Rohraufsatz 3" für sich genommen als Kühlrohr angesehen werden. Bei der folgenden Beschreibung bevorzugter Ausführungsformen wird die Kombination aus Zuführrohr 3' und Rohraufsatz 3" als Kühlrohr 3', 3" bezeichnet. Figur 1A zeigt dabei das Kernkühlsystem 1 in einem zusammengebauten Zustand (links), bei dem der Rohraufsatz 3" vollständig innerhalb des Formkerns 2 verschwindet und in einer Explosionsdarstellung (rechts), durch die der Rohraufsatz 3" sichtbar wird.

Der Rohraufsatz 3" weist ein Stützelement 6 mit einer Stützfläche 7 auf, die mit der Längsachse 14 einen Winkel von ca. 15° einschließt. Das Stützelement weist eine Mehrzahl von Ausnehmungen 29 auf, die Kanäle für das Kühlfluid bilden. Des Weiteren weist der Rohraufsatz 3" eine hintere Zentrierfläche 23 und eine vordere Zentrierfläche 24 auf. Das Stützelement 6 ist einstückig mit Zentrierelementen 22 ausgebildet, die sich in Richtung der Längsachse 14 wendeiförmig über die Außenfläche des Rohraufsatzes 3" erstrecken. Jedes Zentrier-Element 22 windet sich über die Länge des Rohrausatzes 3" einmal vollständig um die Längsachse 14. Zwischen den Zentrier-Elementen 22 werden Kanäle gebildet, über die das Kühlfluid an der Außenfläche des Rohraufsatzes 3" entlang zurückgeführt bzw. hinein geführt wird. Diese Kanäle sind mit den Ausnehmungen im Stützelement 6 verbunden. Durch die Ausnehmungen 29 im Stützelement 6 werden Stützelementteile gebildet, die jeweils mit einem Zentrierelement 22 verbunden sind. Diese Stützelementteil- Zentrier-Elemente 6, 22 der hier gezeigten Ausführungsform weisen über die gesamte Länge des Rohrausatzes 3" ein gleichbleibendes Profil und folglich eine konstante Querschnittsfläche (Profilfläche) auf.

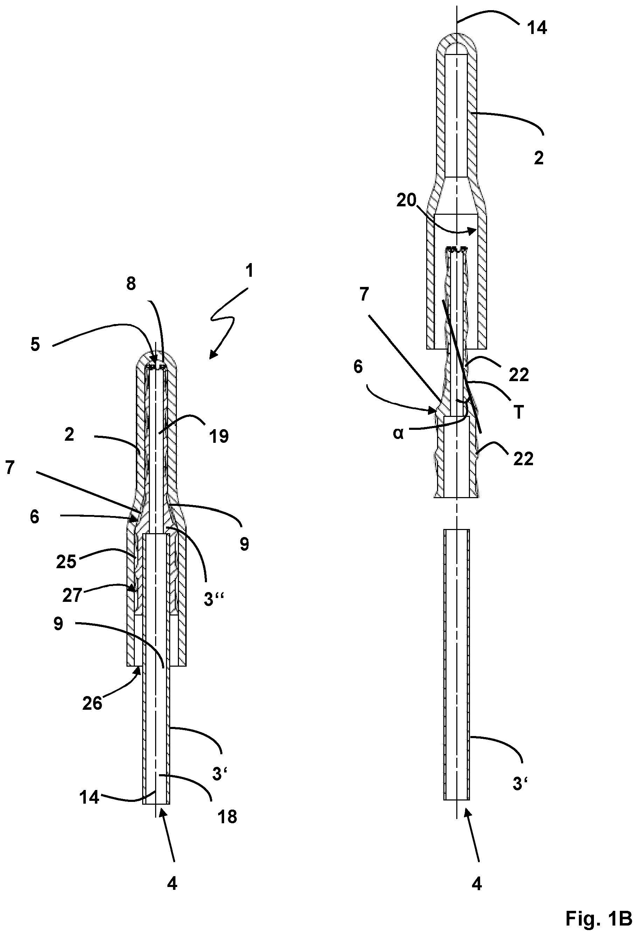

In Figur 1B ist die in Figur 1A gezeigte Ausführungsform in einer Schnittansicht gezeigt, wobei die Schnittebene die Längsachse 14 beinhaltet. Auch hier sind ein zusammengebauter Zustand sowie eine Explosionsdarstellung gezeigt. Anhand der Schnittansicht sind der Fluidkanal 9, der sich innerhalb des Kühlrohrs 3', 3" erstreckt, und Abschnitte des Kernkühlkanals 25, der sich zwischen der Innenfläche des Formkerns 2 - der Kerninnenfläche 20 - und der Außenfläche des Kühlrohrs 3', 3" erstreckt, erkennbar. Über den Kühlrohreinlass 4 gelangt das Kühlfluid zunächst in das Zuführrohr 3' und weiter in den Rohraufsatz 3", bis es über den Kühlrohrauslass 5 in den Kernkühlkanal 25 gelangt, wo es in Kontakt mit der Innenfläche des Formkerns 2 kommt. Durch diesen Kontakt wird Wärme von dem warmen Formkern 2 auf das kältere Kühlfluid übertragen, wodurch es zu einer Abkühlung des Formkerns 2 kommt. Innerhalb des Kernkühlkanals wird das Kühlfluid in Richtung der Längsachse zwischen den Zentrier-Elementen 22 sowie in den Ausnehmungen 29, den Kerninnenfläche 20 und der Außenfläche des Kühlrohrs 3', 3" zu einer Abflussöffnung 26 zurückgeleitet. An diese Abflussöffnung 26 schließt sich in der Praxis ein hier nicht dargestelltes Kreislaufsystem an, welches das nun erwärmte Kühlfluid wieder auf seine ursprüngliche Temperatur abkühlt und danach wieder über den Kühlrohreinlass 4 zur Kühlung bereitstellt. An dieser Stelle sei nochmals erwähnt, dass die Strömung des Kühlfluids auch genau entgegengesetzt zu der hier beschriebenen Strömungsrichtung verlaufen kann.

Der Fluidkanal 9, der innerhalb des Kühlrohrs 3'und 3" verläuft, weist einen vorderen Abschnitt 19 und einen hinteren Abschnitt 18 auf. Der vordere Abschnitt 19 weist dabei eine Querschnittsfläche auf, die kleiner ist als die Querschnittsfläche des hinteren Abschnitts 18. Durch die Explosionsdarstellung wird deutlich, dass sich dies Ausbildung des Fluidkanals primär aus der zweiteiligen Ausbildung des Kühlrohrs 3', 3" ergibt. Der hintere Abschnitt 18 bildet nämlich genau den Abschnitt des Fluidkanals innerhalb des Kühlrohrs 3', 3", in dem der Rohraufsatz 3" das Zuführohr 3' zum Zwecke einer stabilen Verbindung der beiden Komponenten umgibt. Das Zuführohr 3' wird zur Verbindung mit dem Rohraufsatz 3" soweit in das Innere des Rohraufsatzes 3" geschoben, bis ein weiteres Einführen des Zuführohres 3' durch die Innenkontur des Rohraufsatzes 3" blockiert wird.

Das in Figur 1B gezeigte Kühlrohr 3', 3" weist außerdem zusätzlich Vorsprünge 8 auf. Die insgesamt sechs Vorsprünge 8 ragen in Richtung der Längsachse am Kühlrohrauslass über das Kühlrohr hinaus. Ein solcher Vorsprung ist dabei jeweils einstückig mit einem Zentrierelement 22 ausgebildet.

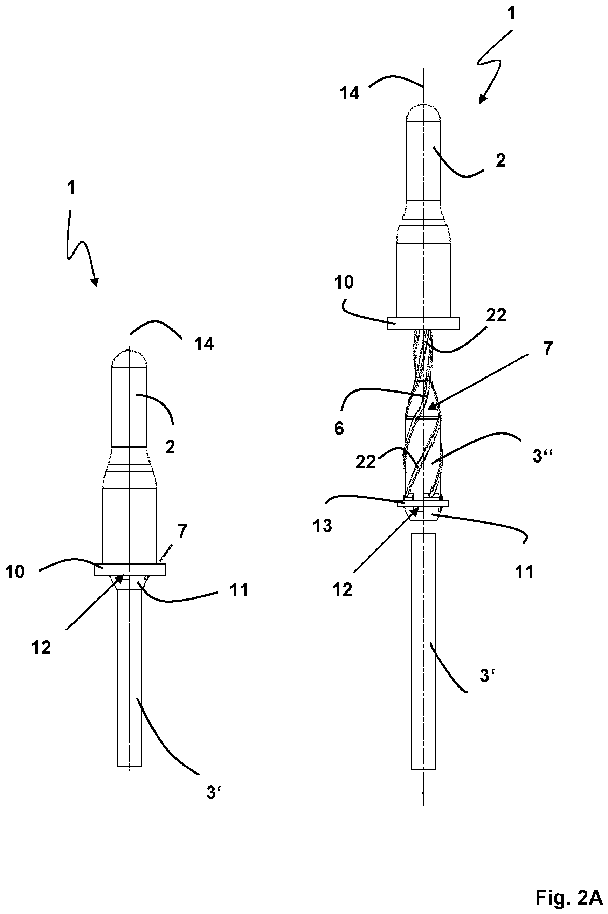

In Figur 2A ist eine zweite Ausführungsform des Kernkühlsystems 1 gezeigt, wobei das Stützelement 6 durch Ausnehmungen 29 in eine Mehrzahl von Stützelementteile unterteilt wird, so dass die Stützelementteile 6 und die Zentrierelemente 22 ebenfalls wendeiförmig und jeweils einstückig als Stützelementteil-Zentrier-Elemente 6, 22 ausgebildet sind. Allerdings sind bei dieser Ausführungsform vier statt sechs Stützelementteil-Zentrier-Elemente 6, 22 vorgesehen, die über die Länge des Rohraufsatzes 3" eine vollständige Windung beschreiben. Der Formkern 2 weist bei dieser Ausführungsform einen Flansch 10 auf und der Rohraufsatz 3" weist einen korrespondierenden Flansch 13 auf. Der Flansch 13 des Rohraufsatzes 3" weist an vier Stellen, von denen zwei für den Betrachter sichtbar sind, als Durchlassöffnungen 12 ausgebildete Ausnehmungen auf. An den Flansch 13 des Rohraufsatzes 3" schließt sich zudem in Richtung des Kühlrohreinlasses 4 eine Verjüngungsabschnitt 11, innerhalb dessen sich die Außenkontur des Rohraufsatzes 3" in Richtung des Kühlrohreinlasses 4 konusförmig verjüngt. Der Flansch 10 stellt somit ebenfalls ein Stützelement mit einer als Anschlagsfläche 16 ausgebildeten Stützfläche dar.

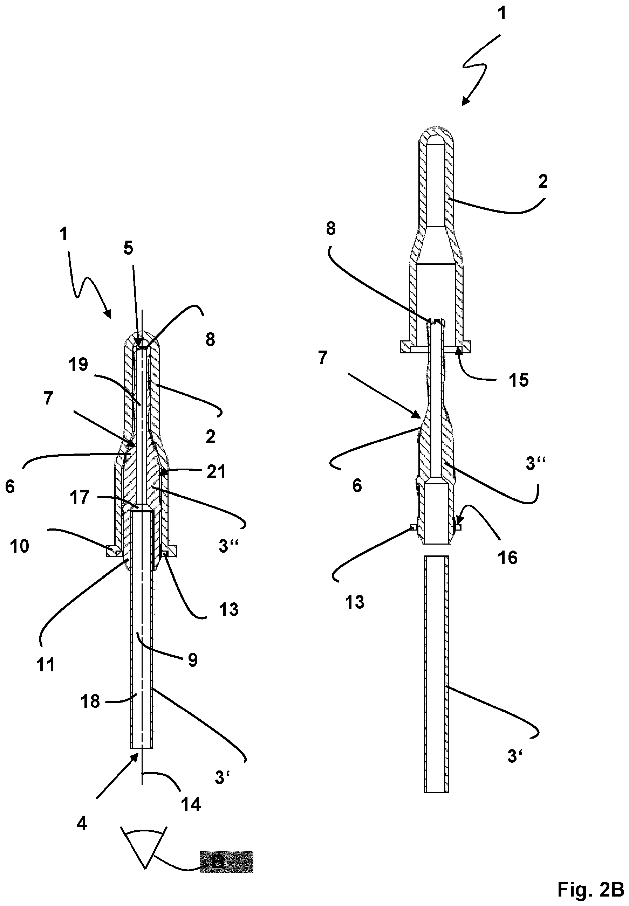

Figur 2B zeigt eine Schnittansicht der in Figur 2A dargestellten zweiten Ausführungsform, wobei die Schnittebene die Längsachse 14 beinhaltet. Bei der hier dargestellten Ausführungsform verjüngt sich der hintere Abschnitt 18 des Fluidkanals 9 konusförmig innerhalb eines Verjüngungsabschnitts 17 des Fluidkanals 9 in Richtung des vorderen Abschnitts 19 des Fluidkanals 9. Zudem ist in Figur 2B anhand der zusammengebauten Darstellung gut erkennbar, wie im zusammengebauten Zustand der Flansch 13 des Rohraufsatzes 3" mit der Anschlagsfläche 16 an der Anschlagsfläche 15 des Flanschs 10 des Formkerns 2 anliegt.

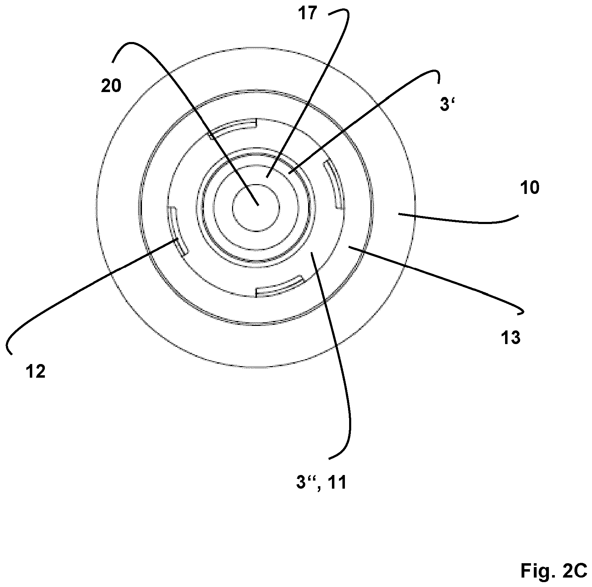

Figur 2C zeigt die in Figur 2A gezeigte Ausführungsform aus einer anderen Perspektive, nämlich aus der Sicht des in Figur 2B markierten Betrachters B, der in Richtung der Längsachse 14 blickt. Von innen nach außen sind die Kerninnenfläche 20, die Innenfläche des Rohraufsatzes 3" im Verjüngungsabschnitt 17 des Fluidkanals 9, das Zuführrohr 3', der Verjüngungsabschnitt 11 des Rohraufsatzes 3", der Flansch 13 des Rohraufsatzes 3" mit den als Durchlassöffnungen 12 ausgebildeten Ausnehmungen und der Flansch 10 des Formkerns zu erkennen. Im Betrieb wird das Kühlfluid über das Zuführrohr 3' in das Kernkühlsystem hineingeleitet - in der in Figur 2C gezeigten Darstellung folglich in die Zeichenebene hinein, vom Betrachter B weg - und trifft dann auf die hier sichtbare Kerninnenfläche 20 des Formkerns 2. Über den in Figur 2B sichtbaren Spalt zwischen Kerninnenfläche 20 und Außenfläche des Kühlrohrs 3', 3" - den Kernkühlkanal - gelangt das Kühlfluid anschließend wieder zurück, strömt zum Betrachters B hin und verlässt das Kernkühlsystem über die Durchlassöffnungen 12.

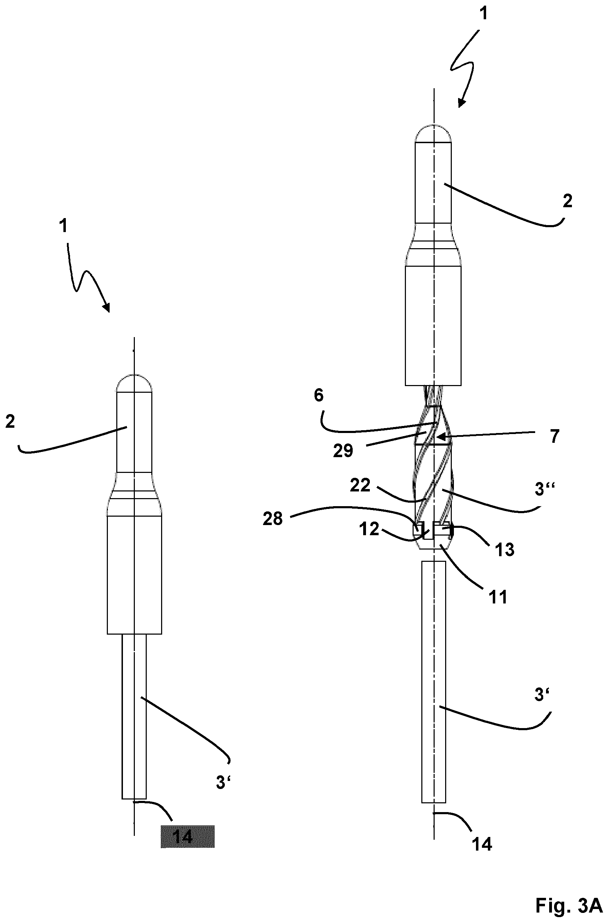

In Figur 3A ist eine dritte Ausführungsform gezeigt, die sich von der in den Figuren 2A, 2B und 2C gezeigten Ausführungsformen ausschließlich dadurch unterscheidet, dass der Formkern 2 keinen Flansch 10 aufweist und der Rohraufsatz 3" einen Flansch 13 aufweist, der sich in seiner Ausbildung gegenüber dem Flansch der zweiten Ausführungsform unterscheidet. In der in Figur 3A gezeigten Ausführungsform ist der Flansch 13 in Umfangsrichtung nicht durchgängig ausgebildet. Der Flansch 13 setzt sich dabei aus insgesamt vier flächig ausgebildeten Flanschsegmenten 28 zusammen, die jeweils einstückig mit einem Zentrierelement 22 bzw. einem Stützelementteil-Zentrier-Element 6, 22 ausgebildet sind. Zwischen den Flanschsegmenten 28 sind jeweils als Durchlassöffnungen 12 ausgebildete Ausnehmungen angeordnet.

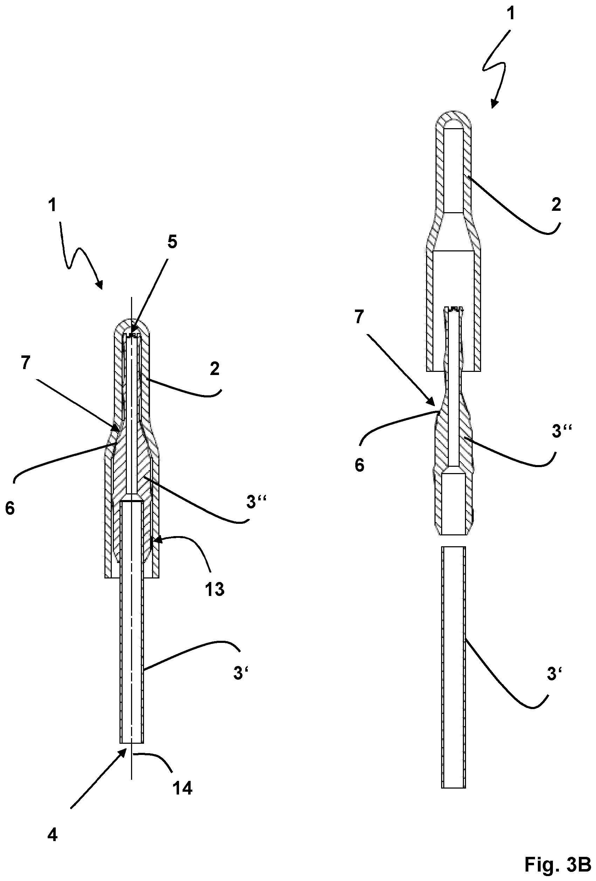

Figur 3B zeigt die entsprechende Schnittansicht des in Figur 3A dargestellten Kernkühlsystems, wobei die Schnittebene die Längsachse 14 beinhaltet. Anhand dieser Schnittansicht wird deutlich, dass der Flansch 13 der dritten Ausführungsform im Gegensatz zu dem Flansch 13 der zweiten Ausführungsform keine Anschlagsfläche aufweist. Der Flansch 13 der dritten Ausführungsform weist vielmehr eine Kontaktoberfläche auf, die in einem zusammengebauten Zustand des Kernkühlsystem mit der Kerninnenfläche in Kontakt steht. Dadurch kommt es bei einer Hin- und Her-Bewegung des Kühlrohrs entlang der Längsachse 14 des Formkerns 2 zu Reibung zwischen Formkern und Kühlrohr 3', 3". Dementsprechend wird eine solche im Betrieb unerwünschte Hin- und Her-Bewegung durch den Flansch 13 gehemmt.

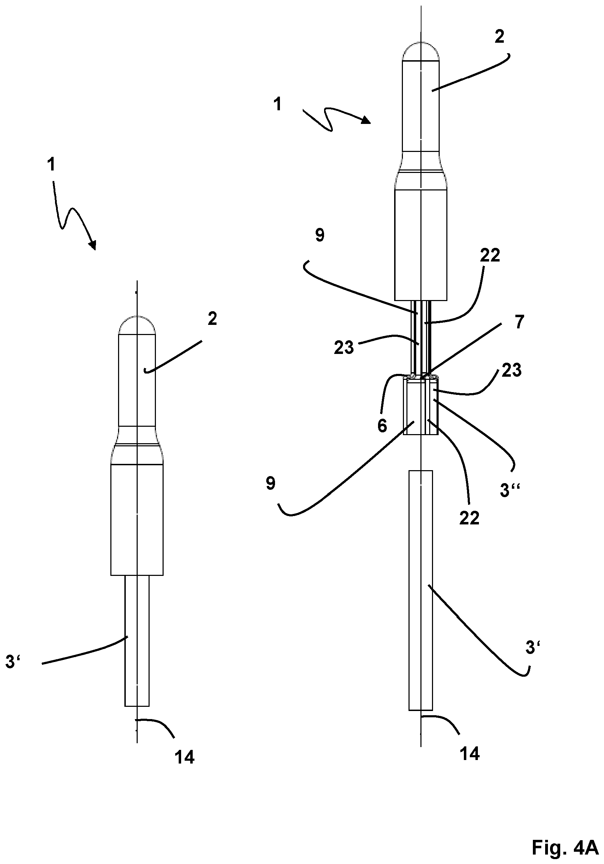

In Figur 4A ist eine vierte Ausführungsform des erfindungsgemäßen Kernkühlsystems 1 gezeigt. Dieses unterscheidet sich von den zuvor gezeigten Kernkühlsystemen insbesondere darin, dass die Zentrierelemente 22 und die Stützelemente 6 des Rohraufsatzes 3" nicht wendelförmig, sondern entlang von Geraden angeordnet sind. Wie bei allen anderen gezeigten Ausführungsformen sind auch in diesem Fall die Stützelemente 6 und die Zentrierelemente 22 einstückig ausgebildet. Ein weiterer erkennbarer Unterschied zu den zuvor gezeigten Ausführungsformen besteht darin, dass die Stützfläche 7 rechtwinklig zur Längsachse 14 angeordnet ist. Das Stützelement ist durch eine Mehrzahl von Ausnehmungen in einzelne Stützelementteile unterteilt. Im Grunde genommen bilden die Zentrierelemente mit den Stützelementteilen Rippen, die sich in Längsrichtung und auf einem kurzen Abschnitt in Radialrichtung erstrecken.

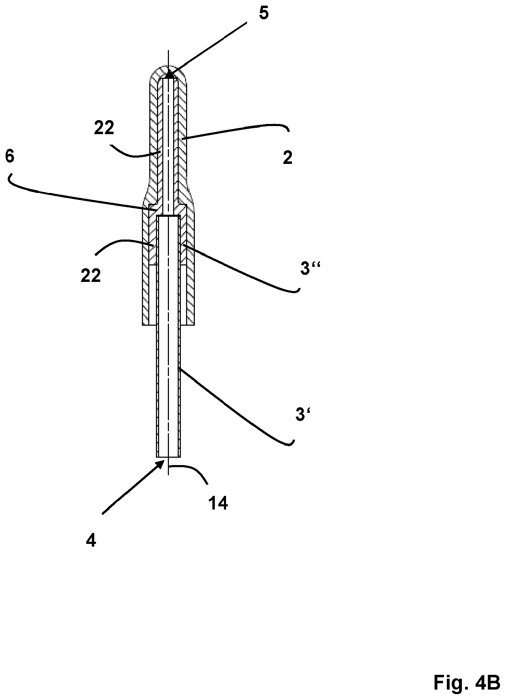

Figur 4B zeigt die in Figur 4A dargestellte Ausführungsform in einer Schnittebene, die die Längsachse 14 beinhaltet. In diesem Fall ist ausschließlich der zusammengebaute Zustand des Kernkühlsystems 1 gezeigt. Die Schnittebene verläuft zudem derart, dass sie zusätzlich zur Längsachse 14 auch zwei auf der Außenfläche des Kühlrohrs gegenüberliegende Stützelemente 6, 22 schneidet. Anhand dieser Darstellung ist sehr gut zu erkennen, wie das Stützelement 6 an der Kerninnenseite 20 des Formkerns 2 anliegt. In der hier gezeigten Schnittebene scheint es so, als würde der Rohraufsatz 3" das Innere des Formkerns vollständig verschließen. In Schnittansichten entlang anderer Ebenen wären die Stütz- und die Zentrier-Elemente gar nicht zu sehen. Stattdessen wird durch den Spalt zwischen Außenfläche des Kühlrohrs und Innenfläche des Formkerns der Kernkühlkanal gebildet.

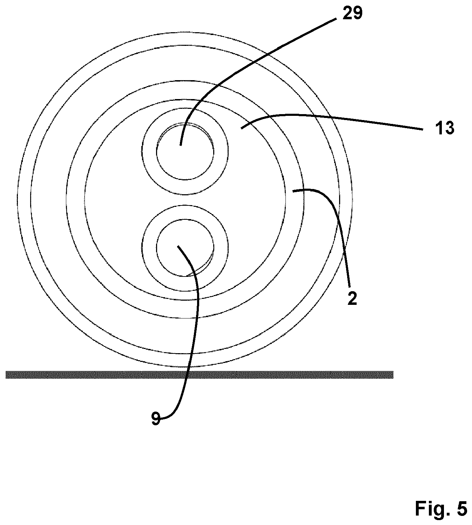

In Figur 5 ist eine Ansicht auf eine fünfte Ausführungsform dargestellt. Wie in Figur 2C ist hier eine Rückseitenansicht gezeigt. Zu erkennen ist der Formkern 2 sowie das den Fluidkanal 9 bildende Kühlrohr. Das Kühlrohr weist ein als Flansch 13 ausgebildetes Stützelement auf. Im Unterschied zu der in der Figur 2C gezeigten Ausführungsform ist das Kühlrohr nicht im Zentrum des Flansches 13 positioniert. Der Flansch 13 weist eine Stützfläche auf, die an dem Kern 2 anliegt. Diese Stützfläche ist in Figur 5 nicht zu erkennen, da sie nach vorne gerichtet ist. D. h. die Stützfläche liegt am unteren Rand des Formkerns an, sodass der Flansch den Formkern verschließt. Über das Kühlrohr 9 kann Kühlfluid zugeführt werden und über die im Flansch 13 bereitgestellte Ausnehmung 29 kann das Kühlfluid das Kernkühlsystem wieder verlassen.

### Bezugszeichenliste

- 1: Kernkühlsystem
- 2: Formkern
- 3': Kühlrohr (Zuführrohr)
- 3": Kühlrohr (Rohraufsatz)
- 4: Kühlrohreinlass
- 5: Kühlrohrauslass
- 6: Stützelement
- 7: Stützfläche
- 8: Vorsprung
- 9: Fluidkanal
- 10: Flansch (Formkern)
- 11: Verjüngungsabschnitt (Außenfläche Kühlrohr)
- 12: Durchlassöffnung
- 13: Flansch (Kühlrohr)
- 14: Längsachse
- 15: Anschlagsfläche (Flansch des Formkerns)
- 16: Anschlagsfläche (Flansch des Kühlrohrs)
- 17: Verjüngungsabschnitt des Fluidkanals
- 18: Hinterer Abschnitt Fluidkanal
- 19: Vorderer Abschnitt Fluidkanal
- 20: Kerninnenfläche
- 21: Spalt
- 22: Zentrierelement
- 23: Hintere Zentrierfläche
- 24: Vordere Zentrierfläche
- 25: Kernkühlkanal
- 26: Abflussöffnung
- 27: Zentrierfläche
- 28: Flanschsegment
- 29: Ausnehmung
- B: Betrachter
- T: Tangente
- α: Winkel, den die Stützfläche mit der Längsachse einschließt

## Patentansprüche

1. Kühlrohr (3', 3") mit einer Längsachse (14), einer Innenfläche und einer Außenfläche für einen Formkern (2) eines Spritzgießwerkzeuges zum Spritzgießen von Preforms aus Kunststoff, wobei durch die Innenfläche ein Fluidkanal (9) begrenzt wird, der sich durch das Kühlrohr erstreckt, wobei das Kühlrohr ein Stützelement (6) an der Außenfläche aufweist, das eine Stützfläche (7) aufweist, die mit der Längsachse einen Winkel einschließt, der größer als 0° ist, wobei das Stützelement zumindest eine in axialer Richtung verlaufende Ausnehmung (29) aufweist, **dadurch gekennzeichnet, dass** sich an das Stützelement in Längsrichtung ein erstes Zentrierelement mit einer ersten Zentrierfläche anschließt, die mit der Längsachse einen Winkel von 0° einschließt, wobei ein zweites Zentrierelement mit einer zweiten Zentrierfläche vorgesehen ist, die derart in Längsrichtung an die Stützfläche anschließt, dass die Stützfläche zwischen erster und zweiter Zentrierfläche angeordnet ist, wobei das erste Zentrierelement, das zweite Zentrierelement und das Stützelement miteinander verbunden sind.

2. Kühlrohr gemäß Anspruch 1, **dadurch gekennzeichnet, dass** die Stützfläche mit der Längsachse einen Winkel zwischen 5° und 45°, besonders bevorzugt einen Winkel zwischen 10° und 25° und am besten einen Winkel von 15° einschließt.

3. Kühlrohr gemäß Anspruch 1 oder 2, **dadurch gekennzeichnet, dass** die Stützfläche im Wesentlichen senkrecht zur Längsachse angeordnet ist.

4. Kühlrohr gemäß einem der Ansprüche 1 bis 3, **dadurch gekennzeichnet, dass** Stütz- und Zentrierelemente sich wendelförmig in Längsrichtung um die Außenfläche bzw. Kerninnenfläche erstrecken oder das Zentrierelement länglich ausgebildet ist und entlang einer Geraden angeordnet ist, welche parallel zur Längsachse verläuft.

5. Kühlrohr gemäß einem der Ansprüche 1 bis 4, **dadurch gekennzeichnet, dass** zwei bis zehn und vorzugsweise vier bis sechs in Umfangsrichtung voneinander beabstandete Stützelemente vorgesehen sind.

6. Kühlrohr gemäß einem der Ansprüche 1 bis 5, **dadurch gekennzeichnet, dass** das Kühlrohr oder der Formkern mit einem 3D-Druck Verfahren hergestellt ist.

7. Kühlrohr gemäß einem der Ansprüche 1 bis 6, **dadurch gekennzeichnet, dass** das Kühlrohr bzw. der Formkern einstückig ausgebildet ist.

8. Kühlrohr gemäß einem der Ansprüche 1 bis 7, **dadurch gekennzeichnet, dass** das Kühlrohr aus Kunststoff, vorzugsweise aus PA, ABS oder PVC besteht.

9. Kühlrohr gemäß einem der Ansprüche 1 bis 8, **dadurch gekennzeichnet, dass** das Stützelement als Flansch und die mindestens eine Ausnehmung als Durchlassöffnung ausgebildet ist.

10. Kühlrohr gemäß einem der Ansprüche 1 bis 9, **dadurch gekennzeichnet, dass** das Kühlrohr zweiteilig ausgebildet, wobei es aus einem Zuführrohr und aus einem das Stützelement aufweisenden Rohraufsatz besteht, wobei vorzugsweise der Rohraufsatz einen Abschnitt des Zuführrohrs umgibt oder ein Abschnitt des Rohraufsatzes vom Zuführrohr umgeben wird.

11. Kernkühlsystem eines Spritzgießwerkzeuges zum Spritzgießen von Preforms aus Kunststoff mit einem Formkern (2), welcher die Gestalt einer einseitig geschlossenen, hohlen Hülse hat mit einer Längsachse (14), einer Kernaußenfläche und einer Kerninnenfläche, und einem Kühlrohr (3', 3") mit einer Längsachse, einer Innenfläche und einer Außenfläche für einen Formkerr eines Spritzgießwerkzeuges zum Spritzgießen von Preforms aus Kunststoff, wobei durch die Innenfläche ein Fluidkanal (9) begrenzt wird, der sich durch das Kühlrohr erstreckt, wobei das Kühlrohr derart im Formkern angeordnet ist, dass ein sich an den Fluidkanal anschließender Kernkühlkanal durch den zwischen der Außenfläche des Kühlrohrs und der Kerninnenfläche verbleibenden Spalt gebildet wird, wobei zumindest ein Stützelement (6) mit einer Stützfläche (7), die mit der Längsachse eine Winkel größer als 0° einschließt, entweder an dem Formkern oder an dem Kühlrohr befestigt und derart zwischen der Kerninnenfläche und der Außenfläche des Kühlrohrs angeordnet ist, dass beim Einsetzen des Kühlrohrs in den Formkern von dem Kühlrohr über die Stützfläche des Stützelements eine Kraft auf den Formkern ausgeübt wird, **dadurch gekennzeichnet, dass** das Kühlrohr nach einem der Ansprüche 1 bis 10 ausgebildet ist.

12. Kernkühlsystem gemäß Anspruch 11, **dadurch gekennzeichnet, dass** entlang des Kernkühlkanals der Abstand zwischen der Kerninnenfläche und der Außenfläche des Kühlrohrs im Wesentlichen konstant ist.

## Claims

1. A cooling tube (3', 3") having a longitudinal axis (14), an inner surface and an outer surface for a mould core (2) of an injection moulding tool for the injection moulding of preforms of plastic, wherein a fluid passage (9) which extends through the cooling tube is defined by the inner surface, wherein the cooling tube has a support element (6) at the outer surface, the support element having a support surface (7) which with the longitudinal axis includes an angle which is greater than 0°, wherein the support element has at least one recess (29) extending in the axial direction,
**characterised in that** adjoining the support element in the longitudinal direction is a first centring element having a first centring surface which includes an angle of 0° with the longitudinal axis, wherein there is provided a second centring element having a second centring surface which adjoins the support surface in the longitudinal direction in such a way that the support surface is disposed between first and second centring surfaces, wherein the first centring element, the second centring element and the support element are connected together.

2. A cooling tube according to claim 1 **characterised in that** the support surface includes with the longitudinal axis an angle between 5° and 45°, particularly preferably an angle between 10° and 25° and best an angle of 15°.

3. A cooling tube according to claim 1 or claim 2 **characterised in that** the support surface is arranged substantially perpendicularly to the longitudinal axis.

4. A cooling tube according to one of claims 1 to 3 **characterised in that** the support and centring elements extend in a spiral configuration in the longitudinal direction around the outer surface or the core inner surface or the centring element is of an elongate configuration and is arranged along a straight line extending parallel to the longitudinal axis.

5. A cooling tube according to one of claims 1 to 4 **characterised in that** there are provided two to ten and preferably four to six support elements spaced from each other in the peripheral direction.

6. A cooling tube according to one of claims 1 to 5 **characterised in that** the cooling tube or the mould core is produced using a 3D printing process.

7. A cooling tube according to one of claims 1 to 6 **characterised in that** the cooling tube or the mould core is in one piece.

8. A cooling tube according to one of claims 1 to 7 **characterised in that** the cooling tube comprises plastic, preferably PA, ABS or PVC.

9. A cooling tube according to one of claims 1 to 8 **characterised in that** the support element is in the form of a flange and the at least one recess is in the form of a passage opening.

10. A cooling tube according to one of claims 1 to 9 **characterised in that** the cooling tube is in two parts, comprising a feed tube and a tube attachment having the support element, wherein preferably the tube attachment surrounds a portion of the feed tube or a portion of the tube attachment is surrounded by the feed tube.

11. A cooling system of an injection moulding tool for the injection moulding of preforms of plastic comprising a mould core (2) which is in the form of a hollow sleeve closed at one side with a longitudinal axis (14), a core outer surface and a core inner surface, and a cooling tube (3', 3") having a longitudinal axis, an inner surface and an outer surface for a mould core of an injection moulding tool for the injection moulding of preforms of plastic, wherein a fluid passage (9) which extends through the cooling tube is defined by the inner surface, wherein the cooling tube is arranged in the mould core in such a way that a core cooling passage adjoining the fluid passage is formed by the gap remaining between the outer surface of the cooling tube and the core inner surface, wherein at least one support element (6) having a support surface (7) which includes an angle greater than 0° with the longitudinal axis is fixed either to the mould core or to the cooling tube and is arranged between the core inner surface and the outer surface of the cooling tube in such a way that when the cooling tube is fitted into the mould core a force is exerted on the mould core by the cooling tube by way of the support surface of the support element,
**characterised in that**
the cooling tube is designed according to one of claims 1 to 10.

12. A core cooling system according to claim 11 **characterised in that** the spacing between the core inner surface and the outer surface of the cooling tube is substantially constant along the core cooling passage.

## Revendications

1. Tube de refroidissement (3', 3") présentant un axe longitudinal (14), une surface intérieure et une surface extérieure, destiné à un noyau de moule (2) d'un outil d'injection permettant le moulage par injection de préformes en matière plastique, dans lequel un canal de fluide (9) s'étendant à travers le tube de refroidissement est délimité par la surface intérieure, dans lequel le tube de refroidissement présente au niveau de la surface extérieure un élément d'appui (6) présentant une surface d'appui (7) qui forme avec l'axe longitudinal un angle supérieur à 0°, dans lequel l'élément d'appui présente au moins un évidement (29) s'étendant dans la direction axiale, **caractérisé en ce qu'**au niveau de l'élément d'appui, dans la direction longitudinale, est raccordé un premier élément de centrage, comprenant une première surface de centrage qui forme avec l'axe longitudinal un angle de 0°, suite à quoi il est prévu un second élément de centrage comprenant une seconde surface de centrage qui se raccorde dans la direction longitudinale à la surface d'appui de telle manière que la surface d'appui est agencée entre les première et seconde surfaces de centrage, le premier élément de centrage, le second élément de centrage et l'élément d'appui étant reliés les uns aux autres.

2. Tube de refroidissement selon la revendication 1, **caractérisé en ce que** la surface d'appui forme avec l'axe longitudinal un angle compris entre 5° et 45°, de manière particulièrement préférée un angle compris entre 10° et 25°, et de la manière la plus préférée un angle de 15°.

3. Tube de refroidissement selon la revendication 1 ou 2, **caractérisé en ce que** la surface d'appui est agencée de manière essentiellement perpendiculaire à l'axe longitudinal.

4. Tube de refroidissement selon l'une des revendications 1 à 3, **caractérisé en ce que** des éléments d'appui et de centrage s'étendent de manière hélicoïdale dans la direction longitudinale autour de la surface extérieure ou de la surface intérieure du noyau, ou l'élément de centrage est de forme allongée et est agencé le long d'une ligne droite s'étendant parallèlement à l'axe longitudinal.

5. Tube de refroidissement selon l'une des revendications 1 à 4, **caractérisé en ce que** sont prévus deux à dix, de manière préférée quatre à six, éléments d'appui espacés les uns des autres dans la direction périphérique.

6. Tube de refroidissement selon l'une des revendications précédentes, **caractérisé en ce que** le tube de refroidissement ou le noyau de moule est fabriqué au moyen d'un procédé d'impression 3D.

7. Tube de refroidissement selon l'une des revendications 1 à 6, **caractérisé en ce que** le tube de refroidissement ou le noyau de moule est réalisé d'un seul tenant.

8. Tube de refroidissement selon l'une des revendications 1 à 7, **caractérisé en ce que** le tube de refroidissement est constitué de matière plastique, de manière préférée de PA, d'ABS ou de PVC.

9. Tube de refroidissement selon l'une des revendications précédentes, **caractérisé en ce que** l'élément d'appui est réalisé sous forme de bride et l'évidement, au moins au nombre de un, est réalisé sous forme d'orifice traversant.

10. Tube de refroidissement selon l'une des revendications 1 à 9, **caractérisé en ce que** le tube de refroidissement est réalisé en deux parties, ledit tube de refroidissement étant constitué d'un tube d'alimentation et d'un embout de tube présentant l'élément d'appui, l'embout de tube entourant de manière préférée une section du tube d'alimentation ou une section de l'embout de tube étant entourée par le tube d'alimentation.

11. Système de refroidissement de noyau d'un outil d'injection destiné au moulage par injection de préformes en matière plastique, comprenant un noyau de moule (2) qui présente la forme d'un manchon creux fermé d'un côté, présentant un axe longitudinal (14), une surface extérieure de noyau et une surface intérieure de noyau, et un tube de refroidissement (3', 3"), qui présente un axe longitudinal, une surface intérieure et une surface extérieure, pour noyau de moule d'un outil d'injection permettant le moulage par injection de préformes en matière plastique, où un canal de fluide (9) s'étendant à travers le tube de refroidissement est délimité par la surface intérieure, où le tube de refroidissement est agencé dans le noyau de moule de telle manière qu'un canal de refroidissement de noyau se raccordant au canal de fluide est formé grâce à l'interstice préservé entre la surface extérieure du tube de refroidissement et la surface intérieure de noyau, où au moins un élément d'appui (6), présentant une surface d'appui (7) qui forme avec l'axe longitudinal un angle supérieur à 0°, est disposé soit au niveau du noyau de moule soit au niveau du tube de refroidissement et est agencé entre la surface intérieure de noyau et la surface extérieure du tube de refroidissement de telle manière que, lorsque le tube de refroidissement est inséré dans le noyau de moule, une force est exercée sur le noyau de moule à partir du tube de refroidissement par l'intermédiaire de la surface d'appui de l'élément d'appui, **caractérisé en ce que** le tube de refroidissement est réalisé selon l'une des revendications 1 à 10.

12. Système de refroidissement de noyau selon la revendication 11, **caractérisé en ce que** la distance entre la surface intérieure de noyau et la surface extérieure du tube de refroidissement est essentiellement constante le long du canal de refroidissement de noyau.
